Europäisches Patentamt

European Patent Office

Office européen des brevets

(11) Publication number: **0 118 949**
**A1**

(12) # EUROPEAN PATENT APPLICATION

(21) Application number: **84200286.7**

(22) Date of filing: **01.03.84**

(51) Int. Cl.³: **H 05 B 7/00**

(30) Priority: **10.03.83 IT 8334883**

(43) Date of publication of application:
**19.09.84 Bulletin 84/38**

(84) Designated Contracting States:
**AT BE CH DE FR GB LI LU NL SE**

(71) Applicant: **FERRIERE NORD Spa**
**Rivoli**
**I-33010 Osoppo (UD)(IT)**

(72) Inventor: **Pittini, Andrea**
**Via Piovega, 44**
**I-33013 Gemona del Friuli (UD)(IT)**

(72) Inventor: **Gensini, Gianni**
**Quartiere Industriale 2**
**I-33030 Buia (UD)(IT)**

(74) Representative: **Petraz, Gilberto Luigi**
**G.L.P. S.a.s. di Gilberto Petraz P.le Cavedalis 6/2**
**I-33100 Udine(IT)**

(54) **Procedure for optimizing the regulation of electrodes in an arc furnace, and device which carries out the procedure.**

(57) This invention concerns a procedure for optimizing the regulation of electrodes in an arc furnace, which comprises the monitoring (1.4) of characteristic values of the arc for the determination (3) of a signal, whereby the signal is treated (8) with a variable gain to control (12) the actuators of the electrodes, and whereby the gain/signal characteristic is varied continuously in real time in correlation with at least one parameter (11) relating to the conditions in the arc furnace.

The invention also concerns a device to carry out the foregoing procedure, which comprises at least one block (1) to monitor voltage, at least on block (4) to monitor current, at least one adder block (3), at least one current memory block, at least one module to control actuators and at least one gain circuit (8), and which has at least one integrator module (9) cooperating with the gain circuit (8) for continuous, real-time, correlated variation of the gain/signal characteristic.

EP 0 118 949 A1

./...

Croydon Printing Company Ltd.

"PROCEDURE FOR OPTIMIZING THE REGULATION OF ELECTRODES IN AN ARC FURNACE, AND DEVICE WHICH CARRIES OUT THE PROCEDURE"

---------

This invention concerns a procedure for optimizing the regulation of electrodes in an arc furnace.

The invention concerns also a device for regulating electrodes in an arc furnace which carries out such a procedure.

It is known that in the regulation of electrodes in an arc furnace various regulation systems are used which are subjected to values which it is wished to keep constant.

Such values may be the voltage or the intensity of current or the impedance.

The electrodes themselves are kept operating according to fixed conditions so far as possible during the whole period while they are working. This is obtained by seeking to equilibrate continuously the variations in the state and form of the scrap or bath by suitable displacements of the electrodes so as to keep the characteristics of the arc as constant as possible.

Systems for regulating the position of the electrodes by hand are known but are inadequate as regards capacity of response, as we shall show better hereafter.

Systems are also known which carry out regulation of the electrodes automatically.

Patent DE-A-2.238.006 (Licentia) is known and discloses a system based on measurement of signals of secondary voltage and current, together with measurement of voltage on one phase so as to take account of the impedance of the cables.

Regulation is carried out, depending on the secondary voltage of the furnace, by means of suitable amplification through a step-by-step amplifier. No account is taken of the actual behaviour of the arc.

Patent DE-B-1.183.185 (Siemens) discloses a system for regulating electrodes actuated by direct current motors. This system takes account of variations in current depending on the working voltage. If the variations exceed a pre-set value, the raising of the electrodes is actuated.

This type of regulation system is based on limitation of the electrode current by displacement of the electrodes themselves.

The Brown Boveri magazine, vol. 55 of March 1968, includes an article (pages 91-97) concerning the regulation of arc furnaces; this article assumes criteria for the regulation of an arc furnace and considers in particular special types of static characteristics of regulation. However, it does not mention systems having a variable characteristic, such as the system disclosed in the description of the present patent application, nor does it mention regulation criteria which can be employed in practice.

The technical magazine AEG-Telefunken, Vol. 63, No.6 1973, contains an article (pages 232-235) according to which, so as to obtain a more prompt regulation, the magnitude of retro-action of the regulator of the electrodes is corrected to suit the secondary voltage of the furnace transformer.

In the systems cited above, it is necessary to treat suitably the signals relating to given values monitored in the system and to assign a suitable gain to such treatment.

The signals thus treated are then employed to control actuators acting on the electrodes.

Such gain depends on the capacity and speed of response of the plant. Thus, the gain serves to be able to obtain given responses in an advantageous time such as to make effective the equilibration of conditions in the furnace.

The known regulation procedures envisage a fixed gain, or else a gain which can be varied to suit the value of the signal monitored on the plant as being indicational of the state of the plant itself, so as to be able to perform the regulation itself.

Variation of the gain according to the known art is effected according to a fixed characteristic depending on such signal.

It has been possible to verify how this procedure is not suited to present tendencies in the field of arc smelting.

It should be noted that the power installed for every unit of load is continually increasing according to present tendencies; this means that, given the same smelting capacity, the power delivered to the electrodes is rising considerably.

As an outcome, the arcs obtained at the ends of the electrodes are becoming longer and longer. Under such conditions, so as to get a high yield, it is necessary to be able to give any variations in functioning a response as quick as possible and as suited as possible to the physiology of the plant, in such a way as to keep optimum conditions of the arc within as small a range as possible.

This need for a continuous search for equilibrium entails, in given phases, an oscillation of the arc and a resulting very low yield thereof when traditional systems are employed.

Such unsteady working conditions reduce the average power of the arc considerably and thus nullify the present operating tendency.

It should be borne in mind that the normally distinguished phases in the smelting process are substantially three in number and consist of perforation of the scrap, smelting of the scrap and refining of the bath.

Each of these phases requires its own value of average necessary power, and up to a short time ago these phases were considered to be separate and independent of each other.

These phases are now considered to be a continuity, also because it has been made possible to apply other forms of energy as well as that generated by the arc.

These other forms of energy are obtained with heating lances, burners, heated pellets, heated scrap, and so on.

However, this continuity of the smelting process accentuates the problems of continuous regulation and thus accentuates further the need to be able to have continuously a response suited to the requirements of the plant; for, as said earlier, the tendency now is to work with a parameter kept substantially constant.

The greater power of the arc is also accentuated by the tendency to use electrodes of a smaller and smaller diameter so as to be able to obtain greater powers of arc.

These greater powers of arc enable working to be carried on with very high currents which, if on the one hand they involve noteworthy advantages in the smelting process, on the other hand entail a high wear of the electrode.

When regulation is carried out by hand, dangers of oscillation with frequent interruptions of the arc take place, and such interruptions entail mechanically an excessive wear of the electrodes, for the response times are too long when regulation is done by hand.

Advanced regulation systems which are available commercially nowadays and are in use enable regulation to be carried out in steps.

Although this regulation in steps offers an advantage as compared to regulation by hand, yet it does not overcome the problem, since the number and quantity of the variables to be controlled do not allow the problem to be solved and it is substantially impossible to obtain an adequate response owing to the times needed to provide a fine enough regulation.

The present author has studied, experimented with and embodied a device which, by using a parameter which tends to be kept substantially constant, enables the foregoing problems to be overcome and a fine regulation and therefore high yields and very small wear of the electrodes to be obtained.

So as to keep the description simple, we shall use the condition which the present author is now employing, and we shall overlook other conditions using other variables, since the innovatory concept can be transferred substantially readily from one condition to another.

The present author has employed on a continuous basis a regulation system which uses constant impedance.

As compared to the known system, the present author has verified that, by controlling the signal of current, or of voltage, or else of both for greater accuracy, it is possible to obtain the information needed to determine the situation within the furnace, that is, the conditions of the arc.

From this the present author has obtained a regulation system of a constant impedance type, which entails a gain depending on the signal monitored, the gain being variable according to a non-fixed characteristic but adjusting itself to the actual working conditions.

This makes it possible to have at all times the value of gain most suited to keeping constant the working conditions of the arc.

The pre-selected value, according to which the gain/signal characteristic is made to vary, is a value proportional to the current at the electrode, the current being integrated in an interval of time such as to compensate for delays in the response of the system, thus avoiding oscillations.

In this way the present author has eliminated the concept of defined phases such as cold scrap, heating, etc. and has obtained a continuous control in defined time by acting on the response of the regulation.

This makes it possible to work with longer arcs and thereby to increase the power per ton.

According to the invention the wear at the end of the electrodes is lessened by at least 25/30% owing to the smaller number of interruptions of the arc.

The procedure is obtained by taking an appropriate signal, proportional to the current, upstream from the gain circuit as existing at present in the known art and by integrating the signal in a pre-set time, which depends on the delay of the response of the system in which the regulation operates.

Indeed, the system is composed of electronic, hydraulic, electrical parts, etc. and therefore has its own delay, which can be readily evaluated by reason of the regulation characteristics which have to be engendered in the various component parts.

In accordance with the value resulting from such integration, the function of the gain is modified and can oscillate within a defined field.

In this way, given equal signals, the gain can oscillate in its turn between a minimum value and a maximum value according to the actual conditions in the furnace and can transmit to the known regulation means the value of the signal thus amplified in an optimum manner.

According to the invention a gain circuit such as is at present available is suitably calibrated so as to provide a minimum characteristic to which is added the action of the circuit of the invention, which supplies a determination of the optimum gain/signal characteristic from time to time.

The invention is therefore based on the creation of a field of variability of the gain characteristic within which it is necessary to operate so as to obtain the desired regulation.

This is contrary to present practice, which envisages one single gain/signal characteristic representing an average development assumed and fixed substantially for the whole cycle or for a determined phase of a cycle.

According to the invention it is possible in this way to obtain a regulation modulated between a "minimum" development and a "maximum" development; the value of modulation of the regulation, that is to say, the resultant development for the gain/signal characteristic, can be suited physiologically to the plant and can enable an almost continuous and constant value of the conditions of the arc to be obtained, with very limited rejects.

By a minimum and a maximum development of the gain/signal characteristic are meant the two extreme curves respectively of the field obtainable with this invention, the curves corresponding to conditions of minimum and maximum responsiveness of the system respectively.

The invention is therefore embodied with a procedure for optimizing the regulation of electrodes in an arc furnace, which comprises the monitoring of characteristic values of the arc for the determination of a signal, whereby the signal is treated with a variable gain to control the actuators of the electrodes, and whereby the gain/signal characteristic is varied continuously in real time in correlation with at least one parameter relating to the conditions in the arc furnace.

The invention is also embodied with a device to carry out the above procedure, which comprises at least one block to monitor voltage, at least one block to monitor current, at least one adder block, at least one current memory block, at least one module to control actuators and at least one gain circuit, and which has at least one integrator module cooperating with the gain circuit for continuous, real-time, correlated variation of the gain/signal characteristic.

With the help of the attached diagram let us now see a preferred embodiment of the invention which uses constant impedance, but it is to be understood that the invention can be applied also to other controlled parameters.

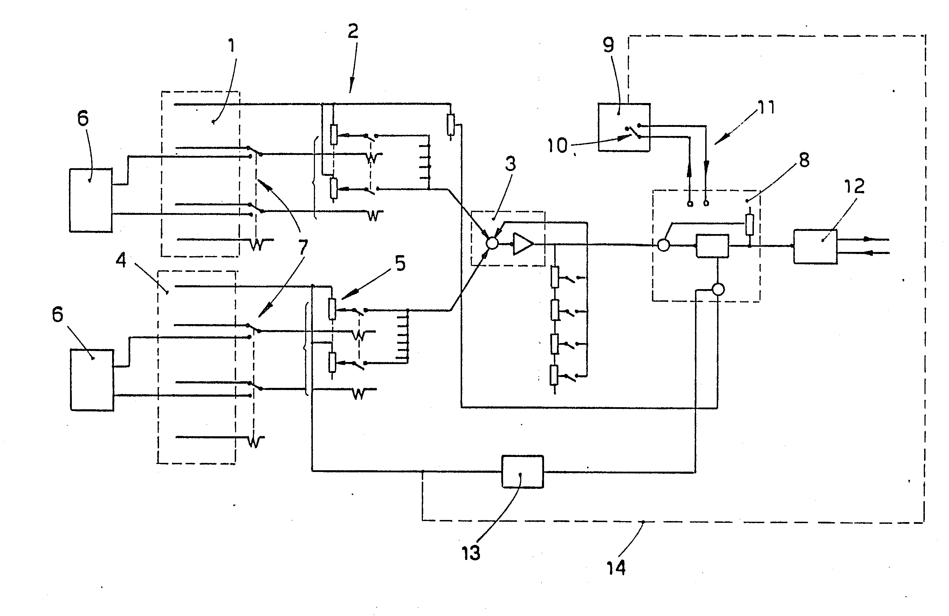

In the figure we have one substantially known part consisting of a specific kind of known regulation system and one substantially new part according to the invention.

As said earlier, when the solution according to the invention is clearly understood, it can also be readily transferred to other regulation systems.

According to the diagram a block 1 to control the voltage cooperates with a series of potentiometers 2 and transmits the resultant of the voltage signal to a module 3 which we shall call an "adder" hereinafter, as it is usually so termed, but which is really a monitor of impedance.

The above resultant is a value derived from the comparison of the actual value of voltage with a pre-set value.

To the adder 3 there also comes the resultant of a signal of current derived from a block 4 controlling the current at the electrode and cooperating with a required number of potentiometers 5.

The aforesaid resultant of the signal of current is obtained, like the resultant of the signal of voltage, by comparing the actual current with a pre-set optimum current.

In the diagram shown the application of the potentiometers can be automated by means of programming groups 6 which take account of the working phases and can be connected up by switches 7.

The adder 3 compares the value of the resultants of voltage and current and obtains a value of the deviation of the instantaneous impedance from the pre-set impedance.

The value resulting from this comparison is transmitted, as a suitable signal, to an appropriate gain circuit 8, which gets further information from the block 1 controlling voltage and from the block 4 controlling current and now serves to regulate the impedance of the arc.

The module 13 is a memory of current and has the known function of ensuring, in each half-period, a value of current at the arc the same as that of the half-period immediately before.

According to the invention an integrator block 9 is envisaged as cooperating with the gain circuit 8 and may perhaps be disconnected with an appropriate switch 10.

The integrator block 9 gets information 14, here relating to the current, and transmits to the gain circuit 8 information 11 which is a function of the values read and of the reaction time of the system and which constitutes the integrated signal according to which the gain/signal characteristic of the circuit 8 varies.

The task of the module 9 is to create a field of variability of the gain/signal characteristic, as we said earlier.

The gain circuit 8 is calibrated to provide a "minimum" characteristic, namely a characteristic corresponding to the minimum possible responsiveness of the system.

The action of the module 9 modifies the functioning of the gain circuit 8 by means of the integrated signal 11 and alters the gain/signal characteristic of the circuit 8 according to actual necessities linked to the instantaneous conditions taking place in the furnace and assigns a minimum limit and a maximum limit to the field of variability of the characteristic itself.

The disconnecting of the block 9 entails operation of the system according to traditional methods. In such a case it is necessary to proceed with a new calibration of the pre-existing circuit 8 so as to permit functioning according to a suitable gain/signal characteristic other than the minimum.

This new calibration may perhaps take place at the time of the actuation of the switch 10 by envisaging suitable calibration means cooperating with the switch 10 itself.

The signal treated by the circuit 8 according to methods governed by the module 9 is sent to a module 12, which in turn controls the actuators of the electrodes.

This enables the system itself to be controlled continuously and ensures at every moment the most suitable response to the operating conditions and therefore carries out regulations with conditions of the maximum efficiency.

0118949

INDEX

1 - voltage control block

2 - potentiometers

3 - adder module

4 - current control block

5 - potentiometers

6 - programming groups

7 - switches

8 - gain circuit

9 - integrator block/module

10 - disconnecting switch

11 - integrated signal

12 - module controlling actuators

13 - current memory

14 - signal to be integrated

CLAIM

1 - Procedure for optimizing the regulation of electrodes in an arc furnace, which comprises the monitoring (1-4) of characteristic values of the arc for the determination (3) of a signal, whereby the signal is treated (8) with a variable gain to control (12) the actuators of the electrodes, and whereby the gain/signal characteristic is varied continuously in real time in correlation with at least one parameter (11) relating to the conditions in the arc furnace.

2 - Procedure for optimizing the regulation of electrodes in an arc furnace as claimed in Claim 1, whereby the parameter (11) relating to the conditions in the arc furnace, according to which the gain/signal characteristic (8) is varied, is a value at least proportional to the integral of the current in a time pre-set according to the characteristics of the furnace.

3 - Procedure for optimizing the regulation of electrodes in an arc furnace as claimed in Claim 1, whereby the parameter (11) relating to the conditions in the arc furnace, according to which the gain/signal characteristic (8) is varied, is a value at least proportional to the integral of the voltage in a time pre-set according to the characteristics of the furnace.

4 - Procedure for optimizing the regulation of electrodes in an arc furnace as claimed in any claim hereinbefore, whereby the regulation is of the constant impedance type.

5 - Device to carry out the procedure of the claims hereinbefore, which comprises at least one block (1) to monitor voltage, at least one block (4) to monitor current, at least one adder block (3), at least one current memory block, at least one module to control actuators and at least one gain circuit (8), and which has at least one integrator module (9) cooperating with the gain circuit (8) for continuous, real- time, correlated variation of the gain/signal characteristic.

6 - Device as claimed in Claim 5, which has switches (10) to disconnect the integrator module (9).

7 - Device as claimed in Claims 5 and 6, which has auxiliary means to calibrate the gain circuit (8) when the integrator module (9) is disconnected.

Gilberto

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | DE-A-2 238 006  (LICENTIA)  * Page 2, line 27 - page 4, line 8 * | 1,3,4, 5 | H 05 B  7/00 |
| D,A | BROWN BOVERI MITTEILUNGEN, vol. 55, March 1968, pages 91-97 "Besondere Merkmale der Brown Boveri Elektrodenregelung bei Lichtbogenöfen" * Page 93 * | 1 | |
| D,A | TECHNISCHE MITTEILUNGEN AEG-TELEFUNKEN, vol. 63, no. 6, 1973, pages 232-235 A. BUXBAUM: "Elektronische Regeleinrichtung für die Elektrodenregelung von Lichtbogenöfen" * Page 233, right-hand column, last paragraph - page 234, left-hand column, first paragraph * | 1 | **TECHNICAL FIELDS SEARCHED (Int. Cl. 3)**  H 05 B  G 05 F |
| D,A | DE-B-1 183 185  (SIEMENS) * Column 3, lines 37-50; column 6, lines 8-24 * | 4 | |

The present search report has been drawn up for all claims

| Place of search THE HAGUE | Date of completion of the search 24-05-1984 | Examiner KERN H. |
|---|---|---|

EPO Form 1503. 03.82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document